# EUROPEAN PATENT APPLICATION

(11) **EP 1 536 602 A2**
(43) Date of publication of application: **01.06.2005**
(21) Application number: 04018637.1
(22) Date of filing: 05.08.2004
(51) Int. Cl.: H04L 12/58, H04Q 7/00

(54) **Electronic communication device, method and program for receiving email by electronic communication device**

(30) Priority: 06.08.2003 JP 2003287589
(71) Applicant: NEC CORPORATION, Tokyo (JP)
(72) Inventor: Muramatsu, Toshihiko, NEC Corporation, Minato-ku Tokyo (JP)
(74) Representative: VOSSIUS & PARTNER

(57) **Abstract**

An electronic communication device (1; 4) is provided, which is capable of improving a way of using email applications and of enhancing efficiency of using memory. In a sub-menu of "email setting", items of "email rule" (303) and "folder setting" (304) are provided. By using the "email rule" (303), search conditions that enable a name of a sender of received email or a name of an item to be specified are registered and actions to be taken when the conditions are met are designated. By using "folder setting" (304), "deleting schedule" (306) is set. With timing of making an inquiry about arrival of email and/or received email at a center or renewing preset time for deleting, received email or email being already stored can be automatically deleted, moved to a folder or transferred.

## Description

The present invention relates to an electronic communication device, a method and a program for receiving email by the electronic communication device and more particularly to a mobile tele- communication device, a method and a program for receiving email by the mobile telecommunication device.

The present application claims priority of Japanese Patent Application No. 2003-287589 filed on August 6, 2003, which is hereby incorporated by reference.

In modern society, many scenes are seen in which information is emailed by using such a mobile telecommunication device as a portable cellular phone and/or a PHS (Personal Handy-phone System) or a portable communication device. By using such the mobile telecommunication device or the portable communication device, not only private email but also information email and advertising email transmitted in a form of Internet contents are received and distributed.

A conventional portable cellular phone is disclosed in Japanese Patent Application Laid-open No. 2003-157218 in which received junk email is automatically deleted, that is, received email, if the number of keywords exceeding the pre-set number of keywords is contained in a body of the received email, is deleted as junk email.

However, in a communication environment in which an amount of email information to be distributed has become large, such the conventional technology as described above presents a problem.

The first problem is that, though information about weather or news is current on the day when it is distributed, it becomes obsolete as time elapses and the information is left within a mobile terminal unless it is deleted by a user, which causes memory being used in the mobile terminal to be exhausted and causes the terminal to be unable to receive other email.

The second problem is that, despite increases in an amount of distributed email information, a mobile terminal repeats simply the same incoming call operations in a uniform manner and, therefore, a user cannot recognize priority of the information unless the user makes a check of a screen of the mobile terminal.

The third problem is that, if a user has to repeat operations of deleting distributed email by manipulating the limited number of keys and small keys of a portable cellular phone, the user feels a stress.

In view of the above, it is an object of the present invention to provide an electronic communication device (such as a mobile telecommunication device) , a method and a program for receiving email by the mobile telecommunication device, which are capable of improving a way of using email applications and of enhancing efficiency of using memory.

According to a first aspect of the present invention, there is provided a method for receiving email by an electronic communication device including:
a step of receiving an incoming call for email on a waiting screen;
a step of making an inquiry about center mail at a server using an email menu;
a step of performing, after having received email from the server, loop processing by a number of pieces of received mail;
a step of performing loop processing of two or more rules being preset;
a step of checking whether or not there exists email that satisfies a search condition designated in a specified rule;
a step of taking, if there exists email that satisfies the search condition designated in the specified rule, an action registered in the rule;
a step of returning a displayed screen to a previous state without performing an incoming call operation if, after completion of all loop processing, there is at least one rule whose condition is met during loop processing and all rules whose conditions are met are set so that the incoming call operation is not performed; and
a step of moving, if there is even one designation that an incoming call operation is to be performed, to the incoming call operation and displaying an incoming call screen.

In the foregoing, a preferable mode is one, wherein the search condition is a "sender name", "item name", or "search letter".

Also, a preferable mode is one wherein the action is "deleting", "movement of email to a specified folder", or "email transfer".

According to a second aspect of the present invention, there is provided a method for receiving email by the electronic communication device including:
a step of letting a clock within an electronic communication device be renewed by a specified time;
a step of performing loop processing of two or more folders being stored;
a step of judging whether or not a schedule for deleting a specified email is set in an arbitrary folder of the two or more folders;
a step of reading, if the schedule for deleting the specified email is set in the arbitrary folder, contents of the specified schedule for deleting the email set in the arbitrary folder; and
a step of comparing present time of the electronic communication device with preset contents about time and, if the present time conforms to the preset time, deleting email saved in the arbitrary folder.

In the foregoing, a preferable mode is one wherein timing of deleting the specified email saved in the arbitrary folder can be set by arbitrarily selecting one of items including "at a time of date change", "on a specified day in every week", "on a specified day in every month", "at a specified hour and minute in every day", or "not deleted" as contents of the schedule for deleting the specified email.

According to a third aspect of the present invention, there is provided an electronic communication device including:
a unit to receive an incoming call for email on a waiting screen;
a unit to make an inquiry about center mail at a server using an email menu;
a unit to perform, after having received email from the server, loop processing by a number of pieces of received mail;
a unit to perform loop processing of two or more rules being preset;
a unit to check whether or not there exists email that satisfies a search condition designated in a specified rule;
a unit to take, if there exists email that satisfies the search condition designated in the specified rule, an action registered in the rule;
a unit to return a displayed screen to a previous state without performing an incoming call operation if, after completion of all loop processing, there is at least one rule whose condition is met during loop processing and all rules whose conditions are met are set so that the incoming call operation is not performed; and
a unit to move, if there is even one designation that an incoming call operation is to be performed, to the incoming call operation and to display an incoming call screen.

In the foregoing, a preferable mode is one wherein the search condition is a "sender name", "item name", or "search letter".

Also, a preferable mode is one wherein the action is "deleting", "movement of email to a specified folder", or "email transfer".

According to a fourth aspect of the present invention, there is provided an electronic communication device including:
a unit to let a clock within the electronic communication device be renewed by a specified time;
a unit to perform loop processing of two or more folders being stored;
a unit to judge whether or not a schedule for deleting a specified email is set in an arbitrary folder of the two or more folders;
a unit to read, if the schedule for deleting the specified email is set in the arbitrary folder, contents of the schedule for deleting the specified email set in the arbitrary folder; and
a unit to compare present time of the electronic communication device with preset time and, if the present time conforms to the preset time, to delete email saved in the arbitrary folder.

In the foregoing, a preferable mode is one wherein timing of deleting the specified email saved in the arbitrary folder can be set by arbitrarily selecting one of items including "at a time of date change", "on a specified day in every week", "on a specified day in every month", "at a specified hour and minute in every day", or "not deleted".

According to a fifth aspect of the present invention, there is provided a program of receiving email by an electronic communication device having a control section execute processing including:
a process of receiving an incoming call for email on a waiting screen;
a process of making an inquiry about center mail at a server using an email menu;
a process of performing, after having received email from the server, loop processing by a number of pieces of received mail;
a process of performing loop processing of two or more rules being preset;
a process of checking whether or not there exists email that satisfies a search condition designated in a specified rule;
a process of taking, if there exists email that satisfies the search condition designated in the specified rule, an action registered in the rule;
a process of returning a displayed screen to a previous state without performing an incoming call operation if, after completion of all loop processing, there is at least one rule whose condition is met during loop processing and all rules whose conditions are met are set so that the incoming call operation is not performed; and
a process of moving, if there is even one designation that an incoming call operation is to be performed, to the incoming call operation and displaying an incoming call screen.

In the foregoing, a preferable mode is one wherein the search condition is a "sender name", "item name", or "search letter".

Also, a preferable mode is one wherein the action is "deleting", "movement of email to a specified folder", or "email transfer".

According to a sixth aspect of the present invention, there is provided a program of receiving email by an electronic communication device having a control section execute processing including:
a process of letting a clock within the electronic communication device be renewed by a specified time;
a process of performing loop processing of two or more folders being stored;
a process of judging whether or not a schedule for deleting a specified email is set in an arbitrary of the two or more folders;
a process of reading, if the schedule for deleting the specified email is set in the arbitrary folder, contents of the schedule for deleting the specified email set in the arbitrary folder; and
a process of comparing present time of the electronic communication device with preset time and, if the present time conforms to the preset time, deleting email saved in the arbitrary folder.

In the foregoing, a preferable mode is one wherein timing of deleting the specified email saved in the arbitrary folder can be set by arbitrarily selecting one of items including "at a time of date change", "on a specified day in every week", "on a specified day in every month", "at a specified hour and minute in every day", or "not deleted".

With the above configuration, arrived email and/or email received by making an inquiry about content of email at a center, when conforming to email whose item name and/or whose destination address have been registered, are automatically deleted and, therefore, unwanted email is not left within the mobile terminal, thus enhancing efficiency of using memory.

With another configuration as above, a user can arbitrarily designate and freely set execution of incoming call operations so that incoming call operations are not performed on email having low priority and, therefore, the user can recognize, by incoming call operations, priority of email information without actually seeing email contents on a screen

With still another configuration as above, a user can designate date and/or time when even stored email is to be erased and, therefore, a user interface that enables email to be erased depending on importance and/or degrees of freshness of email information and with timing desired by the user or to be renewed by an incoming call can be provided.

The above and other objects, advantages, and features of the present invention will be more apparent from the following description taken in conjunction with the accompanying drawings in which:
Fig. 1 is a diagram schematically illustrating a relation between a mobile telecommunication terminal (device), such as a portable cellular phone, and a network employed in a first embodiment of the present invention;
Fig. 2 is a diagram showing configurations of a mobile telecommunication terminal of the first embodiment of the present invention;
Fig. 3 is a diagram of examples of screen display appearing when email is set in the mobile telecommunication terminal of the first embodiment of the present invention;
Fig. 4 is a flowchart explaining software operations to be performed when the mobile telecommunication terminal receives email according to the first embodiment of the present invention; and
Fig. 5 is a flowchart explaining software operations to be performed when a clock of the mobile telecommunication terminal is renewed by one minute according to the first embodiment of the present invention.

Best modes of carrying out the present invention will be described in further detail using various embodiments with reference to the accompanying drawings. According to the present invention, a user can arbitrarily designate a letter contained in information about an item name and/or destination name of email and can also designate actions (deleting of valid date, moving of email to a folder, and designation of incoming call operations) to be taken within a mobile terminal at a time of receiving email and, therefore, a user interface that enables a user to recognize importance and degrees of freshness of received email information is provided which solves various problems associated with conventional technology.

### First Embodiment

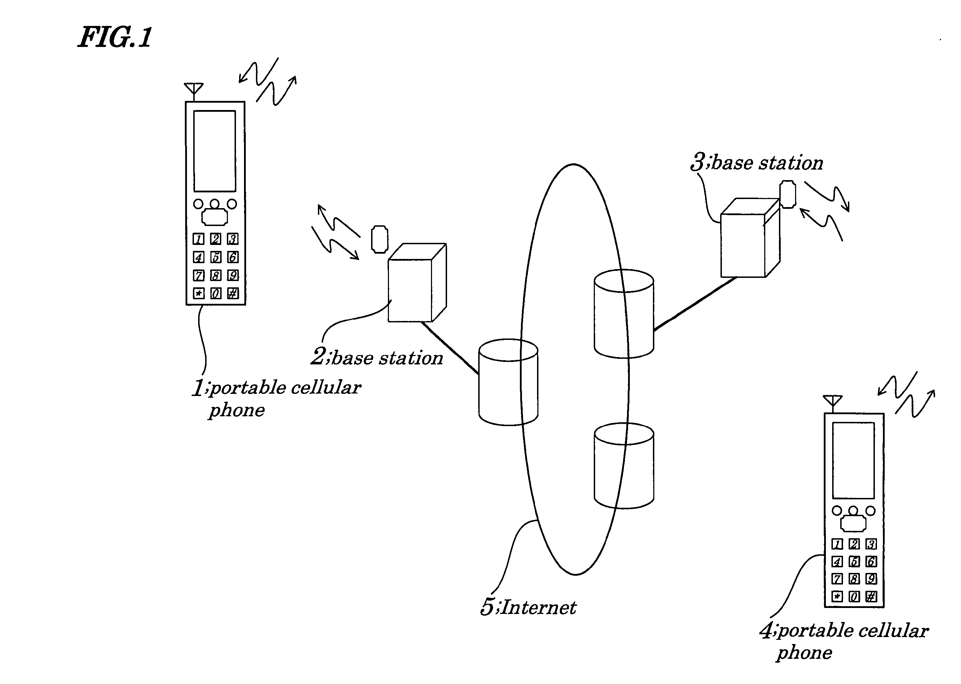

Figure 1 is a diagram schematically illustrating a relation between mobile telecommunication terminals (devices) , such as portable cellular phones 1, 4 and a network. Email transmitted from a portable cellular phone 1 enters a base station 2 and then passes through the Internet 5 and reaches another base station 3 existing near to a portable cellular phone 4 to which the email is transferred and the portable cellular phone 4 receives the email by exchanging electromagnetic waves with the base station 3.

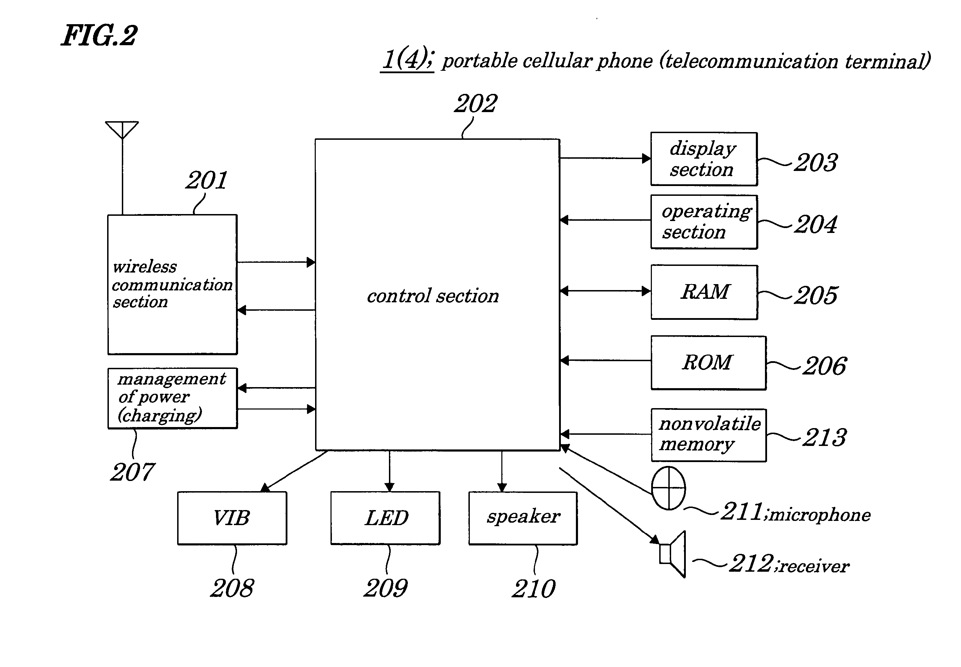

Figure 2 is a diagram showing configurations of the mobile telecommunication terminal (device), such as the portable cellular phone 1(4) according to the first embodiment of the present invention. In the mobile telecommunication terminal, a wireless communication section 201 manages a position storing slot, a signal transmitting slot, and a signal receiving slot (All not shown). The control section 202 transmits and receives email according to a program saved in a ROM (Read Only Memory) 206 and stores contents of each of the transmitted and received emails in a nonvolatile memory 213. The control section 202 has also a function of having a display section 203, VIB (vibrator) 208, LED (Light Emitting Diode) 209, speaker 210 inform a user of arrival of email when the mobile telecommunication terminal receives email. The mobile telecommunication terminal of the present invention, which serves as a portable cellular phone, enables voice communications by being equipped with a microphone 211 and a receiver 212.

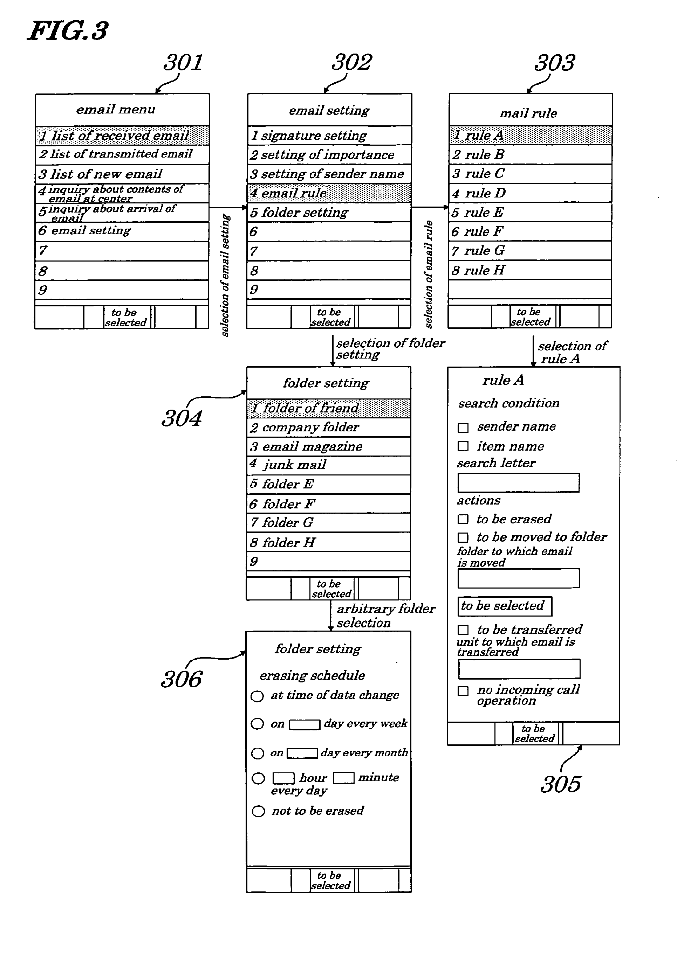

Next, operations of the mobile telecommunication terminal are described in detail by referring to Figs. 3 to 5. Figure 3 shows a flow of displaying on an email setting screen. "Email setting" 302 has setting items of "Email rule" 303 and "Folder setting" 304. By using the item of the "Email rule" 303, a search condition used to extract email and actions to be taken when the search condition are met can be designated for each of rules containing the rule A to the rule H. The search condition includes a name of an email sender, an item name, or a search letter. By using the item of the "Folder setting" 304, an item of "deleting schedule" 306 can be programmed and by arbitrarily selecting one of items "at a time of date change", "on X day every week", "on X day every month", X hour Y minute every day", or "Not to be deleted", proper timing for deleting can be set.

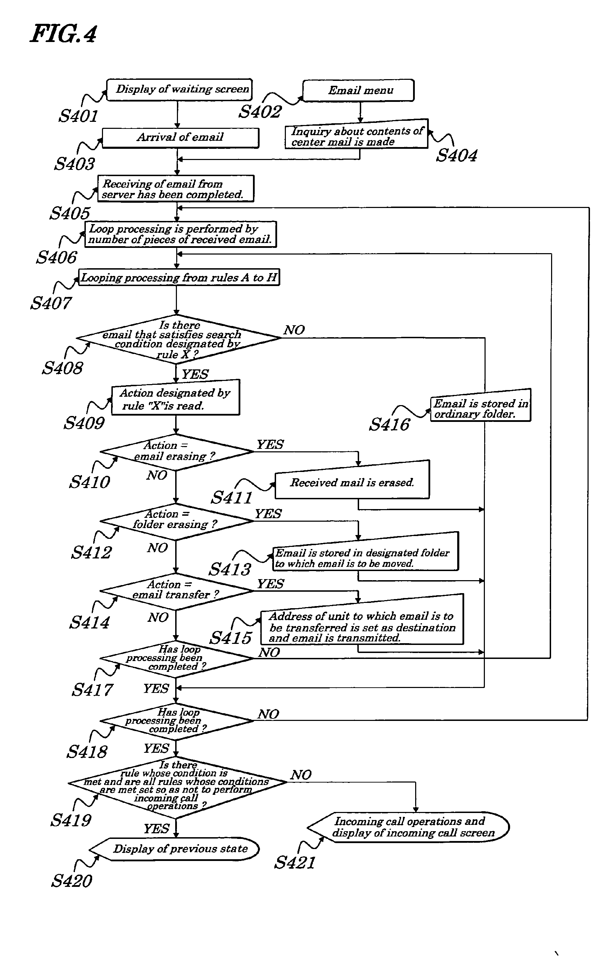

Figure 4 shows operations to be performed when the mobile telecommunication terminal receives email on a waiting screen and operations to be performed when it makes an inquiry about contents of center mail at a server using the setting of "email menu" 301 (Fig. 3). The mobile telecommunication terminal, after having received email from the server (S405), performs loop processing (S406) by the number of received pieces of email (that is, it repeats processes from S406 to S418) and another loop processing (S407) of the set rules A to H (that is, it repeats processes from S407 to S417) . The control section 202 makes a search as to whether there exists email that satisfies a search condition being designated by the rule X (S408) and, if there exists the email satisfying the condition, performs operations of deleting the email, of moving the email to a specified folder to which the email is to be moved, or of transferring the email (S409 to S418). Moreover, the control section 202, after having completed all the loop processing, if there is at least one rule whose condition are met while the loop processing is being performed and all the rules whose conditions are met are set so as not to perform incoming call operations (S419), does not perform the incoming call operations and returns the display to a previous state (S420). If even one rule by which incoming call operations are to be performed exists, the mobile telecommunication terminal moves to incoming call operations and displays an incoming call screen (S421).

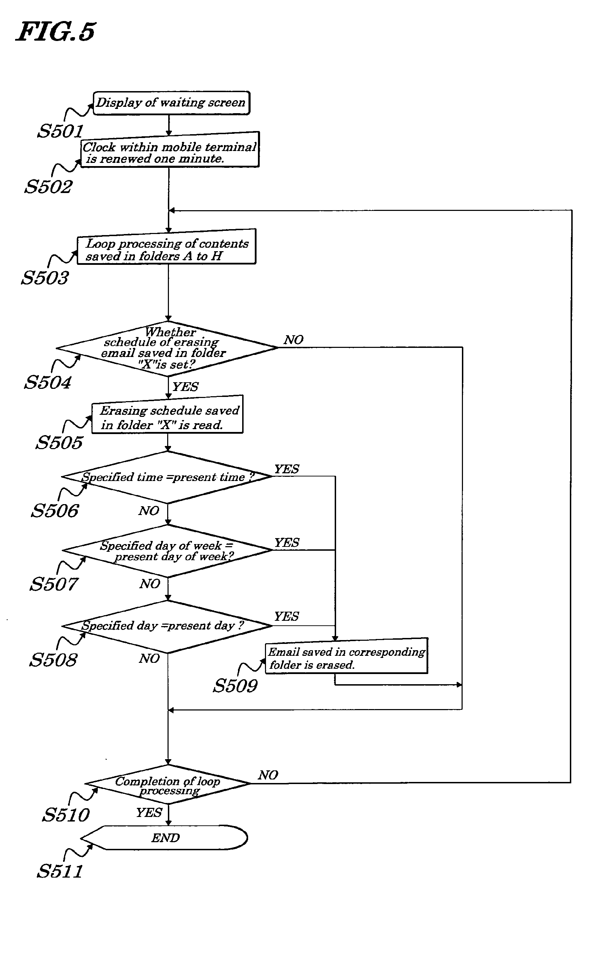

Figure 5 is a flowchart explaining software operations for processing received email being stored to be performed when a clock within the mobile terminal is renewed by one minute. The mobile telecommunication terminal, when a clock within the mobile terminal is renewed by one minute (S502), performs loop processing (S503) of contents saved in the folders A to H (that is, repeats the processings from S503 to S510). Moreover, the mobile terminal judges whether or not a schedule of deleting email saved in the folder X is set (S504) and, if the schedule is set, reads contents preset in the deleting schedule (S505) and then compares present time within the mobile terminal with contents about time specified in the preset schedule and, if there is conformity between them, performs deleting of email saved in the corresponding folder (S506 to S509).

Operations of a microprocessor in the control section 202 (Fig. 2) are controlled according to an email receiving operation program written in the ROM 206 (Fig. 2) within the mobile terminal and the microprocessor in the control section 202 controlled by program performs processing of receiving email, which is specified according to the program of email receiving operations.

### Second Embodiment

In the first embodiment, the present invention is applied to email to be received. However, in the second embodiment, the present invention is applied to email to be transmitted. That is, by specifying search conditions and actions, efficiency of using memory can be improved as well.

### Third Embodiment

In the third embodiment, by specifying a type of an incoming call operations of email having satisfied a search condition, the incoming call operations can be specified depending on importance of information. That is, according to the third embodiment, ringing sounds of the mobile terminal can be made when private information has arrived and no ringing sounds are made when information email contained in contents has arrived.

As described in embodiments as above, with timing of making an inquiry about arrival of email and/or received email at a center and renewing preset time for deleting, received email or email being already stored can be automatically deleted, moved to a folder or transferred, thus enabling a user to effectively make the best use of a memory source and to delete unwanted email timely. Moreover, by arbitrarily setting a menu for whether the incoming call operations are performed or not, a user can be free from receiving unwanted email and can recognize priority of information without actually seeing an LCD (Liquid Crystal Display) screen.

It is apparent that the present invention is not limited to the above embodiments but may be changed and modified without departing from the scope and spirit of the invention. For example the present invention may be applied to not only a mobile telecommunication terminal, but the other electronic communication device such as a desktop type of Personal computer, a note type of Personal computer and a like.

## Claims

1. A method for receiving email by an electronic communication device (1; 4) **characterized by** comprising:
a step of receiving an incoming call for email on a waiting screen;
a step of making an inquiry about center mail at a server using an email menu (301);
a step of performing, after having received email from said server, loop processing by a number of pieces of received mail;
a step of performing loop processing of two or more rules (303) being preset;
a step of checking whether or not there exists email that satisfies a search condition designated in a specified rule;
a step of taking, if there exists email that satisfies said search condition designated in said specified rule, an action registered in said rule;
a step of returning a displayed screen to a previous state without performing an incoming call operation if, after completion of all loop processing, there is at least one rule whose condition is met during loop processing and all rules whose conditions are met are set so that the incoming call operation is not performed; and
a step of moving, if there is even one designation that an incoming call operation is to be performed, to the incoming call operation and displaying an incoming call screen.

2. The method for receiving email by the electronic communication device (1; 4) according to Claim 1, wherein said search condition is a "sender name", "item name", or "search letter".

3. The method for receiving email by the electronic communication device (1; 4) according to claim 1 or 2, wherein said action is "deleting", "movement of email to a specified folder", or "email transfer".

4. A method for receiving email by an electronic communication device (1; 4) **characterized by** comprising:
a step of letting a clock within said electronic communication device (1; 4) be renewed by a specified time;
a step of performing loop processing of two or more folders being stored;
a step of judging whether or not a schedule (306) for deleting a specified email is set in an arbitrary folder of said two or more folders;
a step of reading, if said schedule (306) for deleting said specified email is set in said arbitrary folder, contents of said specified schedule (306) for deleting said email set in said arbitrary folder; and
a step of comparing present' time of said electronic communication device (1; 4) with preset contents about time and, if said present time conforms to said preset time, deleting email saved in said arbitrary folder.

5. The method for receiving email by the electronic communication device (1; 4) according to Claim 4, wherein timing of deleting said specified email saved in said arbitrary folder can be set by arbitrarily selecting one of items including "at a time of date change", "on a specified day in every week", "on a specified day in every month", "at a specified hour and minute in every day", or "not deleted" as contents of said schedule (306) for deleting said specified email.

6. An electronic communication device (1; 4) **characterized by** comprising:
a unit to receive an incoming call for email on a waiting screen;
a unit to make an inquiry about center mail at a server using an email menu (301);
a unit to perform, after having received email from said server, loop processing by a number of pieces of received mail;
a unit to perform loop processing of two or more rules (303) being preset;
a unit to check whether or not there exists email that satisfies a search condition designated in a specified rule;
a unit to take, if there exists email that satisfies said search condition designated in said specified rule, an action registered in said rule;
a unit to return a displayed screen to a previous state without performing an incoming call operation if, after completion of all loop processing, there is at least one rule whose condition is met during loop processing and all rules whose conditions are met are set so that the incoming call operation is not performed; and
a unit to move, if there is even one designation that an incoming call operation is to be performed, to the incoming call operation and to display an incoming call screen.

7. The electronic communication device (1; 4) according to Claim 6, wherein said search condition is a "sender name", "item name", or "search letter".

8. The electronic communication device (1; 4) according to Claim 6 or 7, wherein said action is "deleting", "movement of email to a specified folder", or "email transfer".

9. An electronic communication device (1; 4) **characterized by** comprising:
a unit to let a clock within said electronic communication device (1; 4) be renewed by a specified time;
a unit to perform loop processing of two or more folders being stored;
a unit to judge whether or not a schedule (306) for deleting a specified email is set in an arbitrary folder of said two or more folders;
a unit to read, if said schedule (306) for deleting said specified email is set in said arbitrary folder, contents of said schedule (306) for deleting said specified email set in said arbitrary folder; and
a unit to compare present time of said electronic communication device (1; 4) with preset time and, if said present time conforms to said preset time, to delete email saved in said arbitrary folder.

10. The electronic communication device (1; 4) according to Claim 9, wherein timing of deleting said specified email saved in said arbitrary folder can be set by arbitrarily selecting one of items including "at a time of date change", "on a specified day in every week", "on a specified day in every month", "at a specified hour and minute in every day", or "not deleted".

11. A program of receiving email by an electronic communication device (1; 4) having a control section execute processing **characterized by** comprising:
a process of receiving an incoming call for email on a waiting screen;
a process of making an inquiry about center mail at a server using an email menu (301);
a process of performing, after having received email from said server, loop processing by a number of pieces of received mail;
a process of performing loop processing of two or more rules (303) being preset;
a process of checking whether or not there exists email that satisfies a search condition designated in a specified rule;
a process of taking, if there exists email that satisfies said search condition designated in said specified rule, an action registered in said rule;
a process of returning a displayed screen to a previous state without performing an incoming call operation if, after completion of all loop processing, there is at least one rule whose condition is met during loop processing and all rules whose conditions are met are set so that the incoming call operation is not performed; and
a process of moving, if there is even one designation that an incoming call operation is to be performed, to the incoming call operation and displaying an incoming call screen.

12. The program of receiving email by the electronic communication device (1; 4) according to Claim 11, wherein said search condition is a "sender name", "item name", or "search letter".

13. The program of receiving email by the electronic communication device (1; 4) according to Claim 11 or 12, wherein said action is "deleting", "movement of email to a specified folder", or "email transfer".

14. A program of receiving email by an electronic communication device (1; 4) having a control section execute processing **characterized by** comprising:
a process of letting a clock within said electronic communication device (1; 4) be renewed by a specified time;
a process of performing loop processing of two or more folders being stored;
a process of judging whether or not a schedule (306) for deleting a specified email is set in an arbitrary of said two or more folders;
a process of reading, if said schedule (306) for deleting said specified email is set in said arbitrary folder, contents of said schedule (306) for deleting said specified email set in said arbitrary folder; and
a process of comparing present time of said electronic communication device (1; 4) with preset time and, if said present time conforms to said preset time, deleting email saved in said arbitrary folder.

15. The program of receiving email by the electronic communication device (1; 4) according to Claim 14, wherein timing of deleting said specified email saved in said arbitrary folder can be set by arbitrarily selecting one of items including "at a time of date change", "on a specified day in every week", "on a specified day in every month", "at a specified hour and minute in every day", or "not deleted".
